# EUROPEAN PATENT SPECIFICATION

(11) **EP 3 892 966 B1**
(45) Date of publication and mention of the grant of the patent: **29.11.2023**
(21) Application number: 21166889.2
(22) Date of filing: 06.04.2021
(51) Int. Cl.: G01F 23/263

(54) **ELECTRICAL CAPACITANCE TOMOGRAPHY APPARATUS, SYSTEMS AND METHODS**
GERÄTE, SYSTEME UND VERFAHREN FÜR ELEKTRISCHE KAPAZITÄTSTOMOGRAPHIE
APPAREIL, SYSTÈMES ET PROCÉDÉS DE TOMOGRAPHIE PAR CAPACITÉ ÉLECTRIQUE

(30) Priority: 06.04.2020 GB 202005065; 01.04.2021 GB 202104791
(43) Date of publication of application: 13.10.2021
(73) Proprietor: Atout Process Limited, Bridport, Dorset DT6 3QP (GB)
(72) Inventor: HUNT, Andrew, Wootton, BH25 5TX (GB); FOSTER-TURNER, Richard, Colmworth, MK44 2LB (GB)
(74) Representative: Maschio, Antonio

(56) References cited:
- EP-A1- 2 769 918
- EP-A1- 2 869 044
- EP-A1- 3 071 958
- EP-B1- 3 071 958
- GB-A- 2 295 897
- JP-A- 2014 185 924
- JP-A- 2018 179 937
- US-A- 3 639 835
- US-A1- 2005 172 712
- US-A1- 2005 280 424
- US-A1- 2007 007 861
- US-A1- 2016 051 176
- US-A1- 2018 328 876

## Description

### FIELD OF THE INVENTION

This invention relates to apparatus, systems and methods for performing electrical capacitance tomography (ECT), particularly, but not exclusively, for fuel tanks in spacecraft, such as satellites.

### BACKGROUND TO THE INVENTION

A satellite requires a fuel tank or multiple fuel tanks for holding a fluid propellant, for example, Monomethylhydrazine (MMH) for the fuel and Nitrogen Tetroxide for an oxidiser. The satellite manoeuvres by using thrusters fueled by the propellant to attain or maintain its orbit. It is necessary to provide enough propellant, including a safety margin, to last the service lifetime of the satellite. The size of the safety margin depends on the accuracy of the measurement of the amount of propellant inside the fuel tank or tanks. This may limit the useful lifespan of the satellite.

Accurate measurements of the amount of propellant inside a satellite fuel tank, especially towards the end of a satellite's service life, are important because the satellite must use propellant to "de-orbit", so that it burns up by moving to an orbit which decays, or to move it into a higher orbit. The higher orbit is one reserved for satellites no longer in use (a satellite no longer in use may not be left in the orbit space reserved for operational satellites). As a result, satellite operators must ensure that enough propellant remains in the tank to facilitate the final manoeuvres. This is difficult to ensure because of measurement uncertainties. For example, if the satellite requires a propellant fill level in the fuel tank of 0.5% to "de-orbit", but the uncertainty in the measurement is 5%, then the satellite must "de-orbit" at a measured fill level of 5.5% to ensure enough propellant remains in the fuel tank to perform the manoeuvre. Therefore, the larger the uncertainty in the measurement, the earlier the satellite must "de-orbit" to ensure an adequate safety margin. Conversely, measurements with greater accuracy allow for longer satellite lifespans which is a financially desirable consequence.

Alternatively, if the lifespan of the satellite is limited by other factors, a smaller fuel tank with less propellant stored therein may be provided if the uncertainty in measurements of the amount of propellant inside the fuel tank is reduced. This is financially beneficial because the cost of launching a satellite into orbit is directly related to the weight of the satellite.

However, the measurement of the amount of propellant inside a fuel tank under low or zero-gravity conditions is a significant problem. When a fuel tank enters a zero-gravity environment, the propellant inside may adopt a random distribution and in the absence of gravity, capillary flow and spacecraft acceleration take over meaning that the distribution of fluid may change suddenly. This means that the propellant is not necessarily in contact with a wall of the fuel tank but distributed as free-floating droplets or volumes of propellant. Conventional methods of measuring the amount of fluid inside a tank, such as weighing, are not possible in zero gravity so other techniques for monitoring or estimating the amount of fuel inside a fuel tank are used. Currently, the three most popular techniques are "Pressure Volume Temperature" (PVT), Thermal Propellant Gauging (PGS) and "book-keeping".

PVT consists of using the pressure in a fuel tank to determine the volume of propellant inside. However, the accuracy of the measurement decreases as the amount of propellant decreases. Consequently, the uncertainty in the measurement increases as the propellant is used over the lifespan of the satellite.

PGS works by injecting a heat pulse into a fuel tank. This method involves errors proportional to the fill level of the fuel tank and uses energy from the limited energy stores of the satellite.

"Book-keeping" involves a knowledge of the initial amount of propellant inside the fuel tank and estimating the amount of propellant used by the thrusters. This method requires a knowledge of the rate of consumption of propellant by a thruster and the length of time the thruster is "active". This is the most general technique used for geosynchronous (GEO) satellite applications. However, it is difficult to achieve accurate measurements at the end of the satellite's life because the mass of the satellite, which includes the propellant that remains, and its response to a thrust generated by the burn of the thruster, and also the rate of consumption of propellant by the thruster, may change with time. The analysis required to accurately predict these changes is difficult and therefore present book-keeping methods assume a nominal consumption of propellant throughout the lifetime of a thruster. As a result, errors accumulate over the lifespan of a spacecraft. A satellite may also have more than one interconnected fuel tank in a so-called "multi-tank configuration" particularly if a two-component propellant of a fuel and separate oxidiser is employed. This is known as a "bipropellant system". In this instance, book-keeping errors are likely to be greater in a bipropellant system and may fail to determine the distribution of propellant across the multi-tank configuration.

Currently, the most accurate prediction for the remaining lifetime of a satellite using book-keeping has a margin of error of ±12 months after the elapse of 15 years. By comparison, embodiments of the present invention are anticipated to achieve a prediction of a remaining lifetime of a satellite with a margin of error of ±1 month after the same length of time.

Another common problem associated with fluid propellant in spacecraft fuel tanks is that of "sloshing". Slosh forces occur when the propellant moves within the fuel tank and makes contact with the walls of the fuel tank, thereby exerting a force thereon. Propellant sloshing is a significant engineering issue, especially when propellant constitutes a large fraction of the mass of the spacecraft. The forces caused by sloshing can cause manoeuvring errors. Furthermore, sloshing can starve the propulsion system of propellant creating an uneven and inefficient burn or thrust. Propellant sloshing has been a contributing factor in previous mission failures. The modelling of sloshing may be undertaken through computational fluid dynamics (CFD) or via experimental methods, but the flow structures created are complex and not accurately predicted or measured. Monitoring propellant using optical methods such as pictures and videos has been proposed, but they are not considered accurate and are complex systems.

Electrical Capacitance Tomography (ECT) and other electrical imaging techniques such as Capacitively-Coupled Electrical Conductance Tomography, Electrical Resistance Tomography and Magnetic Impedance Tomography systems have been employed in terrestrial systems to monitor fluid flows in pipework such as oil and gas pipelines. ECT is particularly suited to many electrically non-conducting spacecraft propellants but the other techniques named may be applied for example for more electrically conducting propellants such as MMH and Hydrazine. Current ECT systems have hereto been considered to be not suitable for operation in spacecraft. Known ECT systems such as those used in oil pipelines use solid metal electrodes, for example, copper foil. These electrodes are considered to be heavy and subject to damage in extreme conditions. Accordingly, they are not capable of functioning reliably on a spacecraft due to the extreme environments. Most notably, the extreme temperatures experienced may damage the electrodes due to thermal expansion and contraction. Furthermore, solid electrodes that are lightweight are prone to tearing during the extreme conditions experienced during launch, thereby reducing their effectiveness in space.

The present invention arose from a realisation by the inventors that a novel configuration of electrodes in an ECT system may allow such systems to be utilised in space applications.

The following documents may be usueful for an understanding of the background to the invention. JP2014185924, EP2769918, US2016051176, US2005172717 and JP2018179937. In particular, JP2014185924 describes the use of an electrode in an ECT system.

### SUMMARY OF INVENTION

The present invention in its broadest aspect provides an electrical capacitance tomography (ECT) system which uses electrodes formed from a mesh that possess a greater tolerance to thermal expansion and contraction and are also durable enough to function during and after launch. Furthermore, they may be lighter weight than the electrodes currently used, thereby reducing the cost of launch.

According to the invention there is provided an ECT system as recited in claim 1 with preferred features as set forth in the claims dependent therefrom.

According to the invention there is further provided a method for determining the fluid distribution in a vessel as set forth in claim 12 with preferred features as set forth in the dependent claims. According to the invention there is provided, in an aspect, an ECT system for determining, in use, a distribution of a fluid in a vessel comprising; a plurality of electrodes disposed in or about the vessel, and a processor operably coupled to the electrodes and being configured to determine from outputs therefrom, by an ECT method, the distribution of fluid in the vessel, wherein at least some of the plurality of electrodes are mesh electrodes.

A mesh is a material with a plurality of interstices or holes therein. Such materials may be formed, for example, by spinning, weaving, knitting, expansion or perforation via punching or etching, by deposition or by printing. By providing a mesh electrode there is a saving in weight. Additional advantages include the ability of a mesh to cater for expansion and contraction in a manner which is more robust than when a solid electrode is employed. This is particularly advantageous where, for example, the vessel is provided on a satellite or spacecraft to provide a fuel or propellant tank.

It is envisioned that some but not all of the electrodes may be mesh electrodes. However, it will be most advantageous where the majority or all of the electrodes are mesh electrodes. The mesh may be formed by weaving, knitting or interlacing electrically conductive material. Preferably, the electrodes are made from a woven mesh including warps and wefts defining holes therebetween.

The mesh electrode weave pattern may be configured in different ways. In some embodiments, the wefts and the warps of the woven mesh electrodes are substantially normal to each other. In others, at least one of the warps and the wefts are parallel. These embodiments may provide electrodes with a performance which will vary in predictable way for different temperatures and conditions. But irregular patterns are envisioned or patterns to provide tailored rates of expansion and or contraction under certain temperature conditions. For example, the material may be woven to preferentially resist G forces experienced during launch.

Other types of weave where the warps and the wefts are not perpendicular, but arranged at other angles, may have advantages in conforming to certain vessel shapes.

The number and area of the holes or interstices in the mesh may be varied by varying the thickness of the electrically conductive material and or the amount of "threads" of that material used per given unit area of the electrode.

In some embodiments, at least one of the warps and the wefts has a number per unit area which is constant over the electrode area. This is preferable in some applications since it provides an electrode which will have predictable properties over temperature ranges. It may also be easier to manufacture.

In embodiments, the mesh electrodes are made from at least one interlaced conductive element. In the case of a weave, one of the warps or the wefts may be conductive with the other non-conductive. Preferably, both the warps and wefts will be conductive.

As an alternative to weaving a mesh, a knitted mesh involves a single strand of material being interlaced with itself to form a continuous network. It may be made to be very flexible which may be advantageous for some applications, for example, where the mesh is conformed or built into a tank surface.

Alternatively, the mesh electrode may be configured from a material which is perforated. A perforated mesh made be achieved in a number of ways. For example, from an expanded perforated mesh material. An expanded mesh is formed by cutting slits in a sheet of material and applying a shear stress to open the slits into holes. This mesh is cheap, produces no waste and has good electrical conductivity.

The mesh electrode may be made by welding, brazing or otherwise securing lengths of conductors together.

Preferably, the mesh is provided with interstices or holes which are substantially of the same size. This will make the performance of the mesh under environmental conditions more predictable. The number of interstices or holes per unit area in the mesh may be constant over the electrode area or varied to provide different characteristics in different areas of the mesh.

Preferably, the mesh electrodes are interconnected at their periphery by a conductive material.

Advantageously, the mesh electrodes are coated in a non-conductive resin or plastics material and are preferably incorporated into a reinforced material. Preferably, the resin will encapsulate the conductors and substantially fully fill the interstices of the mesh. The mesh electrodes may then provide an additional reinforcing function to the material. This will provide a unitary electrode which may be placed in or around the vessel in a convenient manner. This may involve bonding the mesh electrode unit, by adhesive or by other attachment methods such as mechanical mounting means, to the vessel surface or laying it up into the wall of the vessel as it is built by composite forming techniques. The material used for coating the mesh electrodes and or the tank or storage vessel may be made of a material which is transparent to allow inspection of the contents through the vessel wall. Polyester or epoxy based resin materials are examples of materials which may be used.

The mesh electrode may be positioned in a variety of locations. For example, where the vessel is formed of conductive material, the electrodes may be disposed inside of the vessel since the vessel will form a Faraday cage. The electrodes may be disposed adjacent the interior surface of the vessel and held to it by adhesive or mechanical fixings.

Where the vessel is non-conductive, the mesh electrodes may be disposed on the inside, outside or within a wall of the vessel. Externally arranging or fixing the electrodes will allow retrofitting of the inventive system in present tank designs and also allow straightforward connection of the electrodes to a measurement unit.

Advantageously, the mesh electrodes are incorporated into the structure of the wall of the vessel. This is advantageous because using the mesh as part of the vessel structure may save some weight. This will require connections to be arranged through the layers of the wall.

The vessel is at least one of a tank configured to retain a fluid or a pipe configured to allow the fluid to flow therethrough. The tank may be a fuel or supply tank for storage of a fuel or other fluid for use in a vehicle and the pipe may be a pipe which is used to convey the fluid to an engine, combustion chamber or thruster.

In embodiments, the vessel comprises a flexible bladder or diaphragm. Advantageously, a flexible bladder may maintain the fluid stored therein as one volume. Preferably, the mesh electrodes are attached to the flexible bladder. The electrodes may be attached in various ways including stitching, gluing, or bonding. In this way, the electrodes can measure the volume of fluid within the bladder and the position of the bladder. The use of mesh electrodes is advantageous since they are particularly suited for attachment to the flexible bladder due to the flexible nature of a mesh. The mesh may be woven to control the way in which the vessel expands to control at least in part the vessel shape.

Alternatively, the vessel may include rigid housing in which the flexible bladder may be contained. In this case, the mesh electrodes may be mounted to the rigid housing or the flexible bladder. The flexible bladder helps to protect the rigid housing of the vessel from damage that may be caused from the fluid contained therein, for example, corrosive damage.

According to the invention, the mesh electrodes are substantially transparent due to the mesh having sufficiently large holes. Further still, one or more portions of the vessel are transparent. It is also envisioned that the entire vessel or portions of the vessel may be transparent. Particular faces of the vessel may be transparent in their entirety or in part.

The substantially transparent electrodes and the transparent portion/s of the vessel provide the advantage of allowing the fluid in the vessel to be viewed by a second non- ECT system. This is particularly useful for performing experiments with an ECT system. It is envisioned that the transparent portion of the vessel may be in alignment with the substantially transparent mesh electrodes such that optically observing and/or recording the fluid distribution inside the vessel is facilitated. Preferably, such an arrangement may be incorporated into a system using light sensors operating in the visible light range to monitor the fluid distribution in the vessel. It is contemplated that sensors operating outside of the visible light range may be used, for example, infrared or ultraviolet wavelengths and hence by transparent it is meant a material which allows certain parts of the spectrum to pass.

In accordance with aspects of the invention, the apparatus may also be incorporated into a vehicle, for example, a spacecraft such as a satellite.

A yet further aspect of the invention provides a method of determining the fluid distribution in a vessel comprising the steps of providing the vessel comprising mesh electrodes, operably coupling the mesh electrodes to a processor being configured to determine from outputs therefrom, by an ECT method, the distribution of fluid in the vessel.

Preferably the method comprises a preliminary step of configuring the mesh to be provided by one or more of the following steps, weaving from an electrically conductive material; interlacing an electrically conductive material; perforating an electrically conductive material to provide holes therein; etching an electrically conductive material to provide holes therein; applying an electrically conductive material by printing, spraying, screening or masking whilst spraying to a substrate to provide electrically conductive regions and interstices of non-electrically conductive regions.

By preferably, laying up electrically conductive material into a resin which is electrically insulating. Preferably, in embodiments, the resin will be substantially transparent to allow the fluid in the vessel to be monitored. Transparency to visible light is preferred. That is to say, transparent to wavelengths of light which are visible or detectable to the human eye. However, the material may be transparent at other wavelengths beyond the optical spectrum such as infrared or ultraviolet wavelengths permitting the use of other sensors or cameras sensitive to such wavelengths.

The materials used to provide the mesh may be of a gauge or thickness such that the mesh does not impede visualisation through the mesh of the contents of the vessel. Preferably, the material is transparent as well as electrically conductive. For example, graphene or graphene-based materials may have such properties.

In an aspect of the invention, there is provided a system for performing electrical capacitance tomography comprising: a processor; a plurality of electrodes, the processor being configured to execute a measurement cycle to drive the electrodes to determine therefrom, via an ECT method, the mass distribution of fluid in a vessel, and wherein the plurality of electrodes are mesh electrodes.

The present invention provides (but is not limited to) accurate real-time measurements of the mass of a fluid in a range of gravity conditions, including zero-gravity, regardless of the fluid distribution. The fluid may be electrically charged or neutral. The ECT system may also measure the movement of the fluid. Furthermore, the measurements may be used in conjunction with computational fluid dynamics (CFD) modelling to predict the sloshing force exerted by the fluid on a retaining structure, e.g. the wall of a fuel tank. Also, the measurements may be provided to a control system of a spacecraft so that operation of the spacecraft can be adjusted based on the predicted sloshing forces to help prevent adverse circumstances.

In one embodiment, the density of the wefts and the density of the warps is substantially the same, thereby defining holes that are substantially even in size. This is desirable because it may create a more reliable electrode in some applications. If the density of wefts and warps is uneven, it is possible for parts of the electrode to be more susceptible to breaking during the extreme conditions experienced during launch and in space. If a portion of the electrode breaks, measurements may be less accurate, or the system may not function properly. Therefore, consistent warp and weft density is the most predictable and reliable type of mesh. However, for some applications, it may be desirable to arrange a varying density in certain directions to provide a strength to resist forces in particular directions. For example, the forces and their directions predicted for a launch of a satellite.

In one embodiment, the mesh electrodes may comprise more than one material. Using more than one conductive material may provide customisation over the balance between the cost of the electrode and the conductivity of the electrode. For similar reasons, electrodes may be formed from a combination of conductive materials and non-conductive materials, for example, glass fibre coated in a conductive material such as a conductive paint.

In embodiments, a measurement unit and a control system are wirelessly connected to one another. This enables the measurement unit to be housed on a spacecraft whilst the control system remains on Earth so that the spacecraft operator may control the ECT system. The measurement unit may be integrated into a pre-existing system already on a spacecraft to save weight. In the system, sensors or cameras may also be provided to view the contents of the vessel through the vessel wall and or through the mesh electrodes.

It will be appreciated that aspects of the described embodiments may be combined with aspects of the other embodiments.

### BRIEF DESCRIPTION OF THE DRAWINGS

Specific embodiments of the invention will now be described, by way of example only, with reference to the figures in which:
**Figure 1** shows an ECT system in accordance with the present invention for monitoring propellant inside a satellite fuel tank comprising a plurality of electrodes, a measurement unit and a control system;
**Figure 2** shows an embodiment of a control system for use with the ECT system of Fig. 1;
**Figure 3** shows a portion of an electrode for use in the ECT system of Fig. 1 that is made from a woven mesh having a plain weave pattern;
**Figure 4** shows a mesh electrode with an electrically conductive periphery, woven into the wall of a tank which is also made from a woven material;
**Figure 5** shows a portion of an electrode for use in the ECT system of Fig. 1 that is made from a knitted mesh;
**Figure 6** shows a portion of an electrode for use in the ECT system of Fig. 1 that is made from a perforated mesh;
**Figure 7** shows a portion of an electrode for use in the ECT system of Fig. 1 that is made from an expanded mesh;
**Figure 8** shows a portion of an electrode for use in the ECT system of Fig. 1 that is made from a welded mesh;
**Figure 9** shows an arrangement of electrodes in accordance with the present invention about a spherical fuel tank in which the electrodes are shaped as segments;
**Figure 10** shows an electrode encapsulated in insulating glass fibre layers and incorporated into a vessel;
**Figure 11** shows an arrangement of electrodes about a cylindrical fuel tank in accordance with an embodiment of the present invention;
**Figure 12** shows an ECT system configured for use with a multi-tank system on a satellite;
**Figure 13A** shows a fuel tank with a rigid housing containing a flexible bladder;
**Figure 13B** shows a fuel tank comprising a flexible bladder without a rigid housing; and
**Figure 14** shows a substantially transparent mesh electrode attached to a transparent portion of a fuel tank.

### DETAILED DESCRIPTION

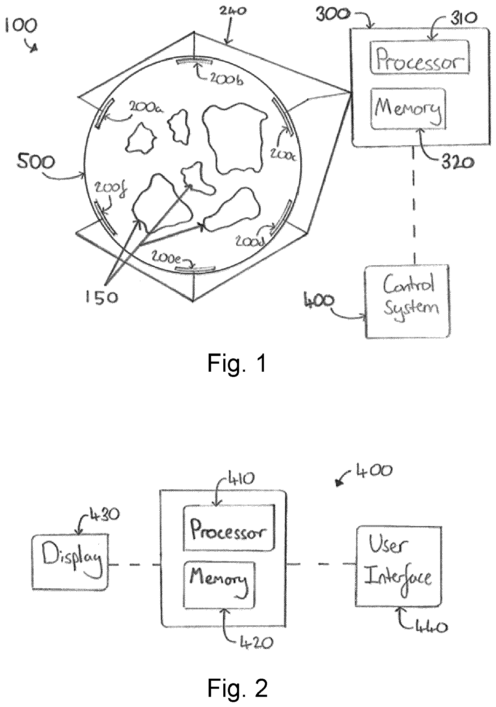

Fig. 1 shows an embodiment of an electrical capacitance tomography (ECT) system 100 according to the present invention. The ECT system 100 is configured to execute a measurement cycle to image the distribution of, and thus to measure, the amount of propellant 150 inside a spherical satellite fuel tank 500. (The propellant 150 itself may be conductive or non-conductive.) The ECT system 100 comprises a plurality of electrodes 200, a measurement unit 300 and a control system 400. Six electrodes 200a-f are evenly spaced about the fuel tank 500 (only six being shown for clarity). The gaps between the electrodes 200 ensure that the electrodes are electrically isolated from one another. In this embodiment, the plurality of electrodes 200 are disposed on the inside of the fuel tank 500 because the fuel tank 500 is made of a conductive material. Each electrode is electrically isolated from the inner surface of the fuel tank 500 by an electrically non-conductive layer which in this case is an adhesive used to fix the electrodes in position.

Each electrode 200 is operably coupled to the measurement unit 300 via a lead 240. The lead 240 may incorporate isolation mechanisms such as optical couplers, capacitive couplers or may be direct.

With continued reference to Fig. 1, the measurement unit 300 comprises a processor 310 and a memory 320. The memory 320 is configured to store measurements and the processor 310 is configured to send measurements to the control system 400. The memory 320 has a capacity to retain measurements until they are transmitted to the control system 400. The memory 320 may be any volatile, non-volatile or semi-volatile memory known in the art. It is envisioned that the measurement unit 300 may be a processor or other suitably configured systems architecture that is already present on the satellite to reduce the weight added by the ECT system 100 to the satellite. Alternatively, it may be provided as a dedicated system.

The measurement unit 300 is in this case the TFL-5000 capacitance measurement unit available from Atout Process LTD which is configured by software such as the Atout Sensor Toolkit software available from the same company.

The measurement unit 300 is wirelessly connected to the control system 400 by a radio downlink and uplink. The control system 400 is based on Earth and accessible to the satellite operator.

As shown in Fig. 2, the control system 400 comprises a processor 410, a memory 420, a display 430 and a user interface 440. The processor 410 is configured to execute a measurement cycle. This involves performing computer tomography processes known in the art. (It is envisioned that in alternative embodiments, the processor 310 of the measurement unit 300 may also be configured to perform computer tomography processes alone or in conjunction with the processor 410 where a distributed processor architecture is adopted.)

The memory 420 is configured to store measurements and or results of the measurement cycle. The memory 420 may be similar to the memory 320 of the measurement unit 300, or it may be different because it is not restricted by the requirement that it be suitable for operation on a satellite. The memory also holds a program of machine executable instructions to carry out the operations.

The display 430 is in communication with the memory 420 and the processor 410. The connection may be wireless or wired. The display 430 may show useful information to the operator such as measurements and or images produced by the measurement cycle. The display 430 can be any known in the art, for example, a computer monitor, a projector screen or a headset.

The user interface 440, also in communication with the processor 410 and the memory 420, allows the operator to control the ECT system 100. The user interface 440 employs a keyboard and other user input devices, for example a "mouse". The control aspects may include resetting the ECT system 100 and turning the ECT system 100 on and off or run time operations. Furthermore, the user interface 440 may allow the satellite operator to input predetermined times for the ECT system 100 to execute a measurement cycle although this may also be automated or pre-programmed.

The measurement cycle will now be described with reference to Fig. 1. The measurement cycle consists of driving each electrode 200 in turn with an electrical signal, such as a highfrequency square wave, and measuring the current arrival at the other electrodes 200. For example, electrode 200a may be driven initially and the current arrival at electrodes 200b, 200c, 200d, 200e and 200f measured. This process is then repeated until each electrode 200a-f has been driven. The ECT system 100 acquires data at 1425 fps (common optical videos operate at 60 fps). The capacitance between each "electrode pair" is derived from the measured current. The current measured between the electrode pair (a, b) will be identical to the current measured between the electrode pair (b, a), where the electrode pair is (driven electrode, receiving electrode). The repeat measurements do not need to be considered. Therefore, in one measurement cycle, the capacitance value across the electrode pairs (a, b) (a, c) (a, d) (a, e) (a, f); (b, c) (b, d) (b, e) (b, f); (c, d) (c, e) (c, f); (d, e) (d, f); (e, f) is obtained.

The capacitance values obtained will range from approximately 10fF to 300fF (femtofarad) for a typical vessel. The ECT system 100 is designed to be immune to capacitance to earth, enabling this level of resolution to be accurately achieved.

From the capacitance values, the permittivity distribution across the fuel tank 500 is calculated. The permittivity distribution is dependent on the way in which the propellant 150 is distributed and the permittivity distribution is used to derive the distribution of propellant 150 inside the fuel tank 500. From the distribution of propellant, the ECT system 100 can determine the total mass of propellant inside the fuel tank 500. The uncertainty on the measurement of the total mass of propellant inside a fuel tank 500 using an ECT system 100 according to the present invention (even during slosh inducing events) is less than 0.5%.

The ECT system 100 can reconstruct the distribution of propellant into an image using computer tomography processes. The image may be constructed from a 32x32 voxel grid. The image may show a 'slice' through the fuel tank 500 with each voxel representing a measure of average fluid density.

Also, the ECT system 100 can determine the movement of fluid elements (small collections of propellant gathered together to form one of potentially a number of discrete masses) inside the fuel tank 500. From the sum of the movement of all fluid elements, the forces exerted on the fuel tank 500 by the propellant (sloshing forces) can be calculated and the collective effect determine. The ECT system 100 provides real-time measurements of the sloshing forces.

The electrodes 200 used, and the way in which they are arranged, with the ECT system 100 will now be described.

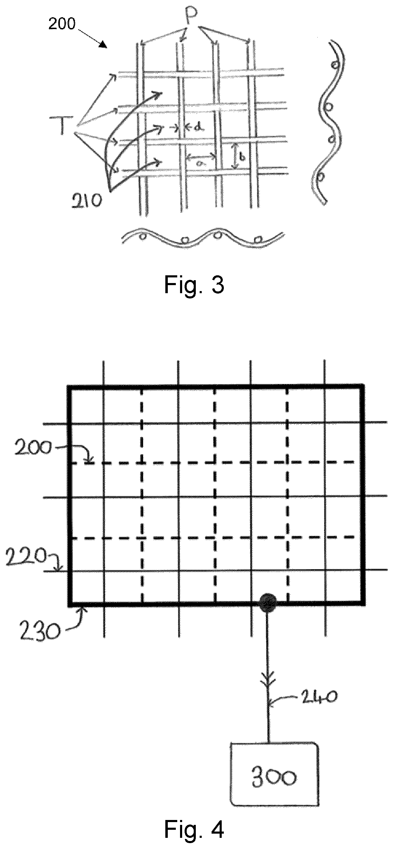

Referring to Fig. 3, a portion of an electrode 200 in accordance with the present invention is shown. The electrode 200 is made from a mesh which is woven. A woven material in the present disclosure is defined to be a material made from at least two interlaced strands of material. Strands in the present disclosure are defined to be single lengths of thread, fibre or wire. Strands usually have a cylindrical cross-section although other cross-sections are viable, e.g. rectangular or oval or more complex shapes. The electrode 200 comprises two strands. The first strand forms the warps "P" and the second strand forms the wefts "T". The two strands are interlaced in a plain weave pattern to form a mesh. The weave pattern is determined by the method of interlacing the strands of material. A wide range of warps and wefts per unit area may be used. A preferred range provides interstices that have a combined area covering 20% to 80% of the total electrode area.

The woven mesh electrodes 200 are highly tolerant of thermal expansion and contraction, and are also lightweight in comparison with solid electrodes because of the holes 210. This makes woven mesh electrodes 200 particularly suitable for use in cryogenic applications, such as tanks holding liquid hydrogen, liquid oxygen, liquid nitrogen or other liquid propellant or fuels.

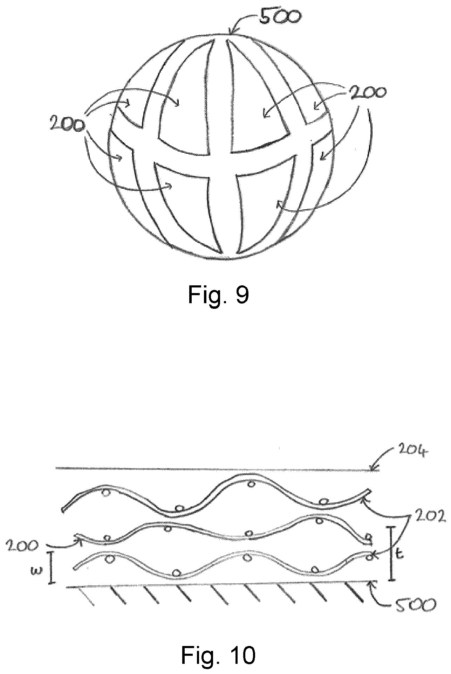

Parameters of woven mesh electrodes 200 include the distance 't' between the electrode 200 and the fuel tank 500 (as shown in Fig. 10), the thickness 'w' of the encapsulating insulating layer (Fig. 10), the hole size or "sparseness" of the weave (determined by distances 'a' and 'b' for a plain weave pattern as shown in Fig. 3) and the diameter 'd' of the strands of material. The following ranges are optimal for these parameters: 30d > a > 3d, 30d > b > 3d, 10b > a > b and the smallest of a and b > t > d. Preferably wherein a, b ≈ t.

As shown in Figs. 3 and 4, woven mesh electrodes 200 can be incorporated into a composite material. For example, the strands of the woven mesh electrode 200 can be woven into a glass fibre layer 220 used to make a fuel tank 500. In this instance, there is negligible weight gain associated with the addition of the electrodes 200 and the mesh itself will provide a reinforcing function.

The woven mesh electrodes may include a conductive periphery or frame 230 to ensure connection between all of the wefts and the warps. A conductive frame 230 further provides for an easier connection to other components of the system via a conductive lead out wire 240.

In another embodiment (not shown), the woven mesh electrodes 200 can comprise layers with different weave patterns. The layers may be interconnected like a multi-layer printed circuit board with conductive vias linking the layers.

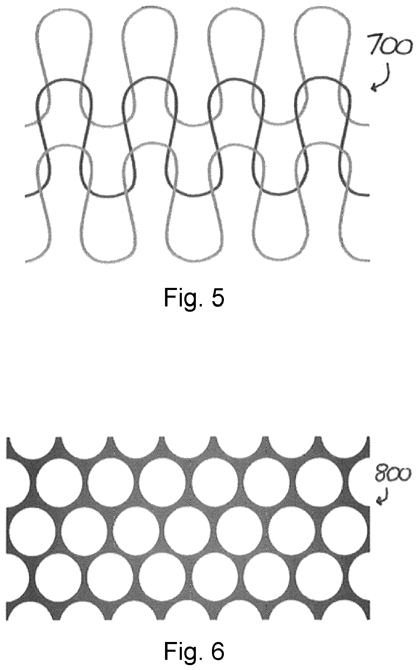

In other embodiments, electrodes can be made from a knitted, perforated, expanded, or welded mesh as will now be described with reference to the embodiments shown in figures 5, 6, 7 and 8. Vapour deposition techniques may be used to coat glass fibres with a conductive layer before or after the fibre is incorporated into the vessel.

With reference to Fig. 5, a knitted mesh 700 is similar to a woven mesh, but it is made from one continuous strand of material. Knitted meshes are usually flexible and able to expand easily.

With reference to Fig. 6, a perforated mesh 800 is formed by making holes 810 in a solid sheet of material. The holes may be made by any means known in the art, such as drilling, punching, laser cutting and chemical etching.

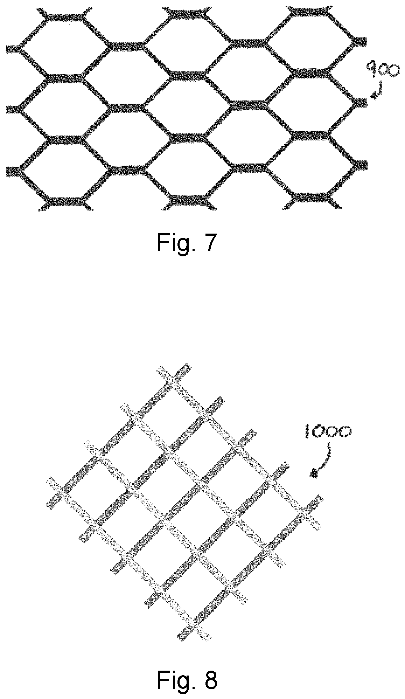

With reference to Fig. 7, an expanded mesh 900 is formed by cutting slits in a sheet of material and applying a shear stress to the material, so the slits open into holes 910. This mesh is cheap, produces no waste and has good electrical conductivity.

With reference to Fig. 8, a welded mesh 1000 involves strands of metal being welded together to form joints at their intersections. It is structurally strong because of the welded portions.

The electrodes 200 may be made of any conductive material such as a metal (e.g. aluminium, copper, steel or titanium), carbon or a conductive coat on the surface of a non-conducting material.

The number of electrodes 200 in an ECT system 100 may vary, for example, from four to twenty. More electrodes 200 may provide images with better resolution but may also increase the complexity and the cost of the ECT system 100. An ECT system 100 comprising fewer electrodes 200 may be more lightweight.

The electrodes 200 can be arranged in many ways so long as the electrode pairs, between which the capacitance is measured, cover substantially the entire interior of the fuel tank 500. For example, they can be arranged as evenly spaced patches or shaped as segments (Fig. 9). The patches may be circular, hexagonal or any other suitable shape. In both embodiments, the electrodes 200 are separated from neighbouring electrodes 200 by gaps.

Referring to Figs. 1 and 10, if the fuel tank 500 is conductive, the electrodes 200 are disposed internally because the fuel tank 500 forms a Faraday cage which would prevent the electric field being detected externally. The electrodes 200 are also electrically insulated from the fuel tank 500 to prevent interference. This may be achieved by mechanically mounting the electrodes 200 to the fuel tank 500 using an electrically insulating material. Referring specifically to Fig. 10, the electrode 200 is encapsulated in non-conductive plastics material e.g. an epoxy or polyester resin together with non-conductive glass fibre layers 202. This results in a composite material which is particularly robust. The insulated electrode is attached to the fuel tank 500 using the same resin 204 that binds the glass fibre layers 202 together.

If the fuel tank 500 is made from a non-conductive material, the electrodes 200 may be disposed on the inside, outside or within the thickness of a wall of the fuel tank 500 because it will not interfere with the electric field between the electrode pairs. The advantage of attaching the electrodes to the outside of the fuel tank 500 is that the ECT system 100 may easily be incorporated into existing satellite fuel tank designs.

In the case of filament-wound tanks (not shown), metal may be sprayed or deposited in appropriate areas by any means known in the art onto the layers that make the fuel tank 500 so that electrodes 200 are formed directly on or within the structure of the fuel tank 500. The spray mash may provide the interstices to form the required "mesh" pattern.

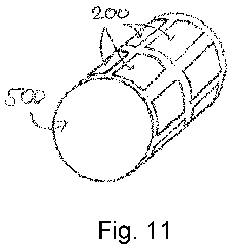

The ECT system 100 of the present invention is shown in the earlier embodiments as being used on a spherical fuel tank 500, but in embodiments it may be used with other shaped fuel tanks, for example, cylindrical or cuboid. Fig. 11 shows an exemplary arrangement of electrodes 200 for a cylindrical fuel tank 500. The electrodes 200 are split into two rings of electrodes across which the capacitance is measured. The total mass of propellant 150 inside the fuel tank 500 is obtained from the addition of the mass of propellant 150 measured to be in each half of the fuel tank 500. This arrangement also allows the movement of fluid elements to be tracked between the two rings and from this the slosh forces can be derived. The ECT system 100 may provide images showing slices through the fuel tank 500 representing the view along the length of the cylindrical fuel tank 500. It will be appreciated that the fuel tank 500 shown may be formed as a "multi-tank".

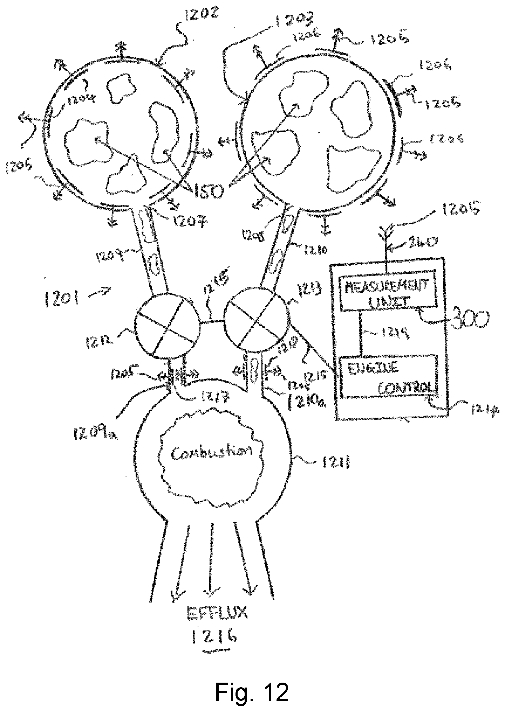

With reference to Fig.12, an ECT system may also be configured to measure the propellant 150 flow rate through a pipe 5000. This may be used to measure the amount of efflux to a thruster or to determine the flow of propellant between fuel tanks. ECT systems configured for use with a pipe 5000 may contain a single ring of electrodes 200 around the pipe 5000 to provide accurate measurements of the propellant 150 flow rate therethrough.

Fig. 12 also shows a spacecraft in accordance with an aspect the invention. In this case, the internal components of a satellite 1201 are shown in schematic form. A satellite will carry a number of systems depending upon its function. For example, a surveillance satellite will include imaging systems, a transmitter to transmit information to a ground station and a receiver to receive information from the ground station. The satellite 1201 includes an engine or thruster system which comprises two tanks 1202 and 1203. Both are spherical and similar to those earlier described.

Tank 1202 is an embodiment of a tank provided with internally located mesh electrodes 1204. These are operably connected by leads 1205 to a measurement unit 300 similarly to the earlier described embodiments. This tank holds a fuel such as Monomethylhydrazine (MMH). In zero-gravity conditions the fuel will not be evenly distributed within the tank but will collect together into a number of "blobs" of fuel.

Tank 1203 is an embodiment of a tank provided with externally located mesh electrodes 1206. These are linked to the leads 1205 and hence to the measurement unit 300. This tank holds an oxidiser such as Nitrogen Tetroxide. This liquid also gathers into a number of collections or "blobs".

The two tanks are provided with outlets 1207, 1208 which open the tanks and deliver the contents into a delivery pipe 1209, 1210. These open into a combustion chamber 1211 at their lower ends (as shown in the figure). It will be seen that at positions intermediate the tank outlets and the combustion chamber there are provided respective flow control valves 1212 and 1213. These are connected to an engine control system 1214 by a control and data bus 1215.

The flow control valves 1212, 1213 are conventional valves operating under the control of the engine control system 1214 to vary the flow of the fuel and oxidiser into the combustion chamber. There the mixture combusts to cause an efflux of gases 1216 to provide the thrust necessary to manoeuvre the satellite.

A lower part of delivery pipe 1209a is that part between the valve 1212 and the combustion chamber 1211. It will be seen that this also includes a set of mesh electrodes 1217. These are internally located as in some of the earlier described embodiments and are coupled to the measurement unit 300 by the leads 1205.

In the case of a lower part 1210a of the delivery pipe 1210, a set of mesh electrodes 1218 are provided located about the external surface of the pipe. These are similar to some of the earlier embodiments and are operably coupled by leads 1205 to measurement unit 300.

The measurement unit 300 operates as before to determine the distribution of the fluids by the tomography process. In this case, the amount of fluid and its distribution in the tank is determined. In addition, the fluid within the lower part of the supply pipes 1209a, 1210a is monitored prior to its entry into the combustion chamber. In response to this, the measurement unit 300 provides an output on connection 1219 to the engine control system 1214. The engine control system 1214 is responsive to this to vary the valve settings of valves 1212, 1213. This will allow compensation to be carried out for the uneven distribution of the fuel and oxidiser as it is released through the valve. It will be appreciated that in alternative embodiments, the monitoring of the respective distributions may be arranged in an upper portion of the pipe by locating mesh electrodes there or indeed both above and below the valve. However, a position after the valve may be preferred where the valve has an appreciable effect on the fluid distribution. By use of the invention, the thrust produced is better controlled as the control may react rapidly to compensate for the distribution of the fuel or oxidiser being supplied.

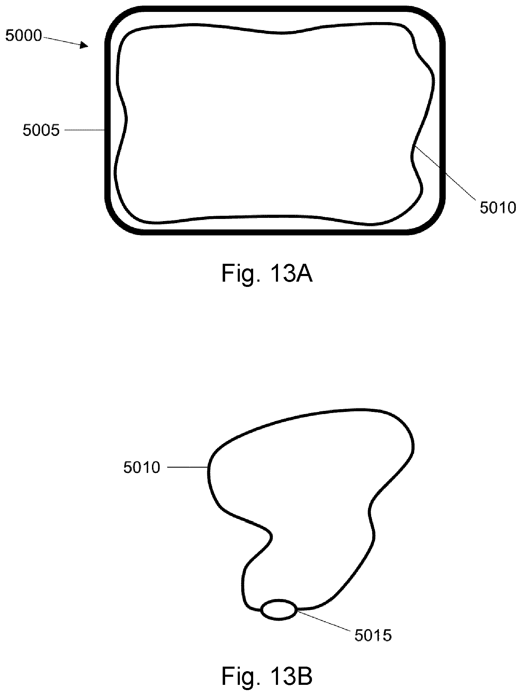

In embodiments, as shown in figures 13A and 13B, fuel tanks may include a flexible bladder or diaphragm to contain the fuel. The fuel may be corrosive. Figure 13A depicts a fuel tank 5000 with a rigid housing 5005 and a flexible bladder 5010 disposed within the rigid housing 5005. The internal bladder 5010 acts as a barrier between the rigid housing 5005 and the fuel. In this way, the rigid housing 5005 is protected from corrosive damage. The flexible bladder may further maintain the fuel as one continuous volume by gathering the fuel together where the bladder is made of a resiliently deformable material.

In similar fashion to the embodiments described above, the mesh electrodes of an ECT system (not shown) may be provided internally or externally of the rigid housing 5005. Alternatively, the flexible nature of a mesh allows the mesh electrodes to be provided attached to or within the walls of the flexible bladder 5010.

Figure 13B shows another embodiment of a fuel tank which does not have a rigid housing. The fuel tank comprises a flexible bladder 5010 used as a standalone vessel. In this case, the mesh electrodes of an ECT system (not shown) are incorporated into the walls of the flexible bladder 5010. The flexible bladder 5010 includes a port or valve 5015 which allows fuel to exit the flexible bladder 5010 to other components of the satellite, for example, a thruster.

It is envisioned that more than one flexible bladder or diaphragm may be included in a fuel tank to form multiple separate compartments, possibly to house different fluids. In this instance, mesh electrodes may be provided around each separate compartment of the fuel tank.

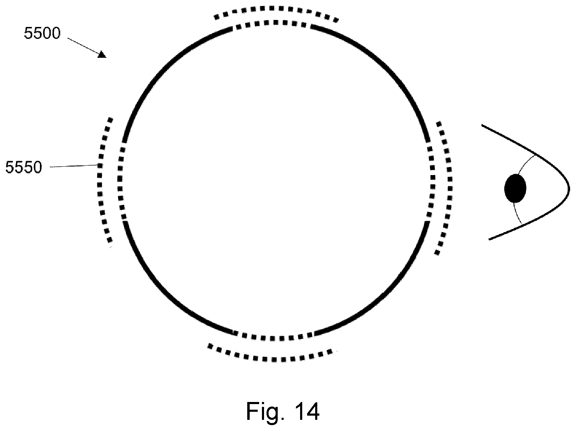

With reference to figure 14, mesh electrodes are substantially transparent when the holes in the mesh represent a sufficient proportion of total mesh area. It has been found that an "open" area of mesh of about 50% of the area of the electrode provides good levels of transparency with an open area of about 80% being found to be particularly good. Consequently, mesh electrodes may be substantially invisible when positioned adjacent or inside a wall of a fuel tank. The fuel tank 5500, shown in figure 14, comprises four substantially transparent electrodes 5550 attached to transparent portions of the fuel tank 5500. In this embodiment, the fluid distribution inside the fuel tank 5500 can be monitored by light sensors or cameras. Therefore, the fluid distribution in the fuel tank 5500 is be determined simultaneously using an ECT system and an optical detection system. This is particularly useful for experimental or test systems. It is envisioned that the entire fuel tank 5500 may be made of a transparent material in order that the tank is transparent substantially over its entirety.

The ECT system is provided alongside any non-ECT system suitable for determining the fluid distribution inside the fuel tank. This may be a light sensor system operating in the visible light spectrum as described above. Alternatives include infrared or ultraviolet sensor systems.

It is further envisioned that the mesh electrodes may be formed in any of the embodiments from an electrically conductive transparent material, for example, graphene or a transparent conductive polymer. In this way, substantially transparent mesh electrodes may be provided with smaller hole sizes or with more layers or mesh. It will be appreciated by a person skilled in the art that features of the above described embodiments may be interchanged or combined whilst remaining within the scope of the invention as defined by the claims.

## Claims

1. An electrical capacitance tomography (ECT) system (100) for determining, in use, a distribution of a fluid (150) in a vessel (500) comprising:
a plurality of electrodes (200) disposed in or about the vessel (500); and
a processor (310) operably coupled to the electrodes (200) and being configured to determine from outputs therefrom, by an ECT method, the distribution of fluid in the vessel, wherein at least some of the plurality of electrodes are mesh electrodes
**characterised in that** the mesh electrodes (5550) and the vessel (5500) are configured to permit a second non-ECT system to measure the fluid distribution inside the vessel (5500);
wherein at least one portion of the vessel is transparent to visible light;
wherein the mesh electrodes are substantially transparent to visible light; and
wherein the at least one portion transparent to visible light is in alignment with the substantially transparent mesh electrodes to permit the second non-ECT system to measure the fluid distribution inside the vessel (5500).

2. The ECT system (100) of claim 1, wherein the electrodes (200) are made from a woven mesh including warps (P) and wefts (T) defining holes (210) therebetween wherein the wefts (P) and the warps (T) of the woven mesh electrodes are substantially normal to each other.

3. The ECT system (100) of claim 2, wherein at least one of the warps (P) and the wefts (T) have a number per unit area which is constant over the electrode (200) area; preferably wherein both the warps (P) and the wefts (T) have a number per unit area which is constant over the electrode (200) area.

4. The ECT system (100) of claim 1, wherein the mesh electrodes are made from at least one interlaced conductive element, a material which is perforated, an expanded perforated mesh material or a welded mesh; preferably wherein the mesh is provided with interstices or holes which are substantially of the same size; preferably still wherein the number of interstices or holes per unit area in the mesh is constant over the electrode area.

5. The ECT system (100) of any preceding claim, wherein the mesh electrodes comprise more than one material; preferably wherein the mesh electrodes comprise at least one non-conductive material (220) and at least one conductive material; preferably still wherein the mesh electrodes are interconnected at their periphery by a conductive material (230).

6. The ECT system (100) as claimed in any preceding claim, wherein the mesh electrodes (200) are coated in a non-conductive resin (204); preferably wherein the mesh electrodes (200) are laid up in a reinforced plastics material.

7. The ECT system (100) of any preceding claim, wherein the vessel (500) is conductive, and the electrodes (200) are disposed inside of the vessel; or wherein the vessel (500) is non-conductive, and the mesh electrodes (200) are disposed on the inside, outside or within a wall of the vessel, preferably wherein the mesh electrodes (200) are incorporated into the structure of the wall of the vessel (500).

8. The ECT system (100) of any preceding claim, wherein the vessel (500) is at least one of a tank configured to retain a fluid or a pipe configured to allow the fluid to flow therethrough; preferably wherein the pipe is part of a fuel delivery system to an engine; preferably still wherein the vessel (500) is located in a space vehicle (1201).

9. The ECT system (100) of any preceding claim, wherein the vessel (500) comprises a flexible bladder (5010); preferably wherein the vessel further comprises a rigid housing (5005), the flexible bladder (5010) being housed within the rigid housing (5005).

10. The ECT system (100) of any preceding claim, wherein the second non-ECT system comprises at least one visible light sensor preferably a camera located outside the vessel (5500).

11. A space vehicle (1201) comprising a fuel vessel (500) and or fuel delivery system for providing fuel to an engine or thruster and further comprising an ECT system (100) as claimed in any preceding claim.

12. A method of determining the fluid (150) distribution in a vessel (500) comprising the steps of:
providing the vessel comprising a plurality of electrodes (200) disposed in or about the vessel (500), wherein at least some of the plurality of electrodes are mesh electrodes (200); and
operably coupling the mesh electrodes (200) to a processor (310) being configured to determine from outputs therefrom, by an ECT method, the distribution of fluid (150) in the vessel (500)
**characterised in that**:
the mesh electrodes and the vessel are configured to permit a second non-ECT system to measure the fluid distribution inside the vessel;
wherein at least one portion of the vessel is transparent to visible light; wherein the mesh electrodes are substantially transparent to visible light; wherein the at least one transparent to visible light portion of the vessel is in alignment with the substantially transparent to visible light mesh electrodes.

13. The method of claim 12, wherein the step of providing the vessel comprising the mesh electrodes comprises the steps of:
providing the vessel (500);
fixing on, in or about the vessel the mesh electrodes (200).

14. The method of claim 12 or 13, further comprising the preliminary step of configuring the mesh electrodes (200) by weaving an electrically conductive material.

15. The method of claim 14, wherein the mesh electrodes (200) are integrated into the structure of the vessel (500); preferably wherein the mesh electrodes (200) are integrated into the structure of the vessel by laying up electrically conductive material into electrically insulating resin (204); preferably still wherein the vessel is formed by laminations of resin and reinforcing material and incorporates the mesh electrodes (200) within the laminations.

## Patentansprüche

1. System (100) für elektrische Kapazitätstomographie (ECT) zum Bestimmen, während des Gebrauchs, einer Verteilung eines Fluids (150) in einem Gefäß (500), umfassend:
eine Vielzahl von Elektroden (200), die in oder um das Gefäß (500) herum angeordnet sind; und
einen Prozessor (310), der betriebsmäßig mit den Elektroden (200) gekoppelt und so konfiguriert ist, dass er aus Ausgaben davon, durch ein ECT-Verfahren, die Verteilung von Fluid in dem Gefäß bestimmt, wobei mindestens einige der Vielzahl von Elektroden Netzelektroden sind
**dadurch gekennzeichnet, dass** die Netzelektroden (5550) und das Gefäß (5500) so konfiguriert sind, dass ein zweites Nicht-ECT-System die Fluidverteilung innerhalb des Gefäßes (5500) messen kann;
wobei mindestens ein Abschnitt des Gefäßes für sichtbares Licht transparent ist;
wobei die Netzelektroden im Wesentlichen transparent für sichtbares Licht sind; und
wobei der mindestens eine für sichtbares Licht transparente Abschnitt mit den im Wesentlichen transparenten Netzelektroden ausgerichtet ist, um dem zweiten Nicht-ECT-System zu ermöglichen, die Fluidverteilung innerhalb des Gefäßes (5500) zu messen.

2. ECT-System (100) nach Anspruch 1, wobei die Elektroden (200) aus einem gewebten Netz einschließlich Kettfäden (P) und Schussfäden (T) hergestellt sind, die dazwischen Löcher (210) definieren, wobei die Schussfäden (P) und die Kettfäden (T) der gewebten Netzelektroden im Wesentlichen senkrecht zueinander stehen.

3. ECT-System (100) nach Anspruch 2, wobei mindestens einer der Kettfäden (P) und der Schussfäden (T) eine Anzahl pro Flächeneinheit aufweist, die über die Fläche der Elektrode (200) konstant ist; wobei vorzugsweise sowohl die Kettfäden (P) als auch die Schussfäden (T) eine Anzahl pro Flächeneinheit aufweisen, die über die Fläche der Elektrode (200) konstant ist.

4. ECT-System (100) nach Anspruch 1, wobei die Netzelektroden aus mindestens einem verflochtenen leitfähigen Element, einem perforierten Material, einem expandierten perforierten Netzmaterial oder einem geschweißten Netz gefertigt sind; wobei das Netz vorzugsweise mit Zwischenräumen oder Löchern versehen ist, die im Wesentlichen die gleiche Größe aufweisen; wobei vorzugsweise weiterhin die Anzahl der Zwischenräume oder Löcher pro Flächeneinheit im Netz über die Elektrodenfläche konstant ist.

5. ECT-System (100) einem vorstehenden Anspruch, wobei die Netzelektroden mehr als ein Material umfassen; wobei die Netzelektroden vorzugsweise mindestens ein nicht leitfähiges Material (220) und mindestens ein leitfähiges Material umfassen; wobei die Netzelektroden vorzugsweise weiterhin an ihrem Umfang durch ein leitfähiges Material (230) miteinander verbunden sind.

6. ECT-System (100) einem vorstehenden Anspruch, wobei die Netzelektroden (200) mit einem nicht leitfähigen Harz (204) beschichtet sind; wobei die Netzelektroden (200) vorzugsweise in einem verstärkten Kunststoffmaterial ausgelegt sind.

7. ECT-System (100) nach einem vorstehenden Anspruch, wobei das Gefäß (500) leitfähig ist und die Elektroden (200) im Inneren des Gefäßes angeordnet sind; oder wobei das Gefäß (500) nicht leitfähig ist und die Netzelektroden (200) auf der Innenseite, der Außenseite oder innerhalb einer Wand des Gefäßes angeordnet sind, wobei die Netzelektroden (200) vorzugsweise in die Struktur der Wand leitfähig des Gefäßes (500) integriert sind.

8. ECT-System (100) nach einem vorstehenden Anspruch, wobei das Gefäß (500) mindestens eines von einem Tank, der so konfiguriert ist, dass er ein Fluid aufnimmt, oder einem Rohr ist, das so konfiguriert ist, dass es das Fluid dort hindurch strömen lässt; wobei das Rohr vorzugsweise Teil eines Treibstoffabgabesystems zu einem Motor ist; wobei sich vorzugsweise weiterhin das Gefäß (500) in einem Raumfahrzeug (1201) befindet.

9. ECT-System (100) nach einem vorstehenden Anspruch, wobei das Gefäß (500) eine flexible Blase (5010) umfasst; wobei das Gefäß vorzugsweise weiter ein starres Gehäuse (5005) umfasst, wobei die flexible Blase (5010) im starren Gehäuse (5005) untergebracht ist.

10. ECT-System (100) nach einem der vorstehenden Ansprüche, wobei das zweite Nicht-ECT-System mindestens einen Sensor für sichtbares Licht umfasst, vorzugsweise eine Kamera, die sich außerhalb des Gefäßes (5500) befindet.

11. Raumfahrzeug (1201), das ein Treibstoffgefäß (500) und/oder ein Treibstoffabgabesystem zum Bereitstellen von Treibstoff an einen Motor oder ein Triebwerk umfasst, und weiter umfassend ein ECT-System (100) nach einem vorstehenden Anspruch.

12. Verfahren zum Bestimmen der Fluidverteilung (150) in einem Gefäß (500), umfassend die folgenden Schritte:
Bereitstellen des Gefäßes mit einer Vielzahl von Elektroden (200), die in oder um das Gefäß (500) angeordnet sind, wobei mindestens einige der Vielzahl von Netzelektroden (200) sind; und
einen Prozessor (310), der betriebsmäßig mit den Elektroden (200) gekoppelt und so konfiguriert ist, dass er aus Ausgaben davon, durch ein ECT-Verfahren, die Verteilung von Fluid (150) in dem Gefäß (500) bestimmt
**dadurch gekennzeichnet, dass**:
die Netzelektroden und das Gefäß so konfiguriert sind, dass ein zweites Nicht-ECT-System die Fluidverteilung innerhalb des Gefäßes messen kann;
wobei mindestens ein Abschnitt des Gefäßes für sichtbares Licht transparent ist; wobei die Netzelektroden im Wesentlichen transparent für sichtbares Licht sind; wobei der mindestens eine für sichtbares Licht transparente Abschnitt des Gefäßes mit den im Wesentlichen für sichtbares Licht transparenten Netzelektroden ausgerichtet ist.

13. Verfahren nach Anspruch 12, wobei der Schritt des Bereitstellens des Gefäßes mit den Netzelektroden die folgenden Schritte umfasst:
Bereitstellen des Gefäßes (500);
Befestigen der Netzelektroden (200) an, in oder um das Gefäß.

14. Verfahren nach Anspruch 12 oder 13, weiter umfassend den vorläufigen Schritt des Konfigurierens der Netzelektroden (200) durch Weben eines elektrisch leitfähigen Materials.

15. Verfahren nach Anspruch 14, wobei die Netzelektroden (200) in die Struktur des Gefäßes (500) integriert werden; wobei die Netzelektroden (200) vorzugsweise in die Struktur des Gefäßes integriert werden, indem elektrisch leitfähiges Material in elektrisch isolierendes Harz (204) gelegt wird; wobei vorzugsweise weiterhin das Gefäß durch Laminierungen aus Harz und Verstärkungsmaterial gebildet wird und die Netzelektroden (200) in die Laminierungen integriert sind.

## Revendications

1. Système de tomographie par capacité électrique (ECT) (100) pour déterminer, en utilisation, une répartition d'un fluide (150) dans un récipient (500) comprenant :
une pluralité d'électrodes (200) disposées à l'intérieur ou autour du récipient (500) ; et
un processeur (310) fonctionnellement couplé aux électrodes (200) et configuré pour déterminer à partir de leurs sorties, par un procédé ECT, la répartition de fluide dans le récipient, dans lequel au moins certaines de la pluralité d'électrodes sont des électrodes maillées,
**caractérisé en ce que** les électrodes maillées (5550) et le récipient (5500) sont configurés pour permettre à un second système non-ECT de mesurer la répartition de fluide à l'intérieur du récipient (5500) ;
dans lequel au moins une partie du récipient est transparente à la lumière visible ;
dans lequel les électrodes maillées sont sensiblement transparentes à la lumière visible ; et
dans lequel l'au moins une partie transparente à la lumière visible est alignée avec les électrodes maillées sensiblement transparentes pour permettre au second système non-ECT de mesurer la répartition de fluide à l'intérieur du récipient (5500).

2. Système ECT (100) selon la revendication 1, dans lequel les électrodes (200) sont fabriquées à partir d'un maillage tissé incluant des chaînes (P) et des trames (T) définissant des trous (210) entre celles-ci, dans lequel les chaînes (P) et les trames (T) des électrodes maillées tissées sont sensiblement perpendiculaires les unes aux autres.

3. Système ECT (100) selon la revendication 2, dans lequel au moins un élément parmi les chaînes (P) et les trames (T) présente un nombre par unité de surface qui est constant sur la surface d'électrode (200) ; de préférence dans lequel à la fois les chaînes (P) et les trames (T) présentent un nombre par unité de surface qui est constant sur la surface d'électrode (200).

4. Système ECT (100) selon la revendication 1, dans lequel les électrodes maillées sont fabriquées à partir d'au moins un élément conducteur entrelacé, un matériau qui est perforé, un matériau maillé perforé expansé ou un maillage soudé ; de préférence dans lequel le maillage est pourvu d'interstices ou de trous qui sont sensiblement de la même taille ; plus préférentiellement dans lequel le nombre d'interstices ou de trous par unité de surface dans le maillage est constant sur la surface d'électrode.

5. Système ECT (100) selon une quelconque revendication précédente, dans lequel les électrodes maillées comprennent plus d'un matériau ; de préférence dans lequel les électrodes maillées comprennent au moins un matériau non-conducteur (220) et au moins un matériau conducteur; plus préférentiellement dans lequel les électrodes maillées sont interconnectées au niveau de leur périphérie par un matériau conducteur (230).

6. Système ECT (100) selon une quelconque revendication précédente, dans lequel les électrodes maillées (200) sont revêtues d'une résine non-conductrice (204); de préférence dans lequel les électrodes maillées (200) sont déposées dans une matière plastique renforcée.

7. Système ECT (100) selon une quelconque revendication précédente, dans lequel le récipient (500) est conducteur, et les électrodes (200) sont disposées à l'intérieur du récipient ; ou dans lequel le récipient (500) est non-conducteur, et les électrodes maillées (200) sont disposées sur l'intérieur, l'extérieur ou à l'intérieur d'une paroi du récipient, de préférence dans lequel les électrodes maillées (200) sont incorporées dans la structure de la paroi du récipient (500).

8. Système ECT (100) selon une quelconque revendication précédente, dans lequel le récipient (500) est au moins un élément parmi un réservoir configuré pour retenir un fluide ou un tuyau configuré pour permettre au fluide de s'écouler à travers celui-ci ; de préférence dans lequel le tuyau fait partie d'un système de distribution de carburant à un moteur ; plus préférentiellement dans lequel le récipient (500) est situé dans un véhicule spatial (1201).

9. Système ECT (100) selon une quelconque revendication précédente, dans lequel le récipient (500) comprend une vessie flexible (5010) ; de préférence dans lequel le récipient comprend en outre un boîtier rigide (5005), la vessie flexible (5010) étant logée à l'intérieur du boîtier rigide (5005).

10. Système ECT (100) selon une quelconque revendication précédente, dans lequel le second système non-ECT comprend au moins un capteur de lumière visible, de préférence une caméra située à l'extérieur du récipient (5500).

11. Véhicule spatial (1201) comprenant un réservoir de carburant (500) et/ou un système de distribution de carburant pour fournir du carburant à un moteur ou à un propulseur et comprenant en outre un système ECT (100) selon une quelconque revendication précédente.

12. Procédé de détermination de la répartition de fluide (150) dans un récipient (500) comprenant les étapes de :
fourniture du récipient comprenant une pluralité d'électrodes (200) disposées à l'intérieur ou autour du récipient (500), dans lequel au moins certaines de la pluralité d'électrodes sont des électrodes maillées (200) ; et
couplage fonctionnel des électrodes maillées (200) à un processeur (310) configuré pour déterminer à partir de leurs sorties, par un procédé ECT, la répartition de fluide (150) dans le récipient (500)
**caractérisé en ce que** :
les électrodes maillées et le récipient sont configurés pour permettre à un second système non-ECT de mesurer la répartition de fluide à l'intérieur du récipient ;
dans lequel au moins une partie du récipient est transparente à la lumière visible ; dans lequel les électrodes maillées sont sensiblement transparentes à la lumière visible ; dans lequel l'au moins une partie transparente à la lumière visible du récipient est alignée avec les électrodes maillées sensiblement transparentes à la lumière visible.

13. Procédé selon la revendication 12, dans lequel l'étape de fourniture du récipient comprenant les électrodes maillées comprend les étapes de :
fourniture du récipient (500) ;
fixation sur, dans ou autour du récipient des électrodes maillées (200).

14. Procédé selon la revendication 12 ou 13, comprenant en outre l'étape préliminaire de configuration des électrodes maillées (200) par le tissage d'un matériau électroconducteur.

15. Procédé selon la revendication 14, dans lequel les électrodes maillées (200) sont intégrées dans la structure du récipient (500) ; de préférence dans lequel les électrodes maillées (200) sont intégrées dans la structure du récipient par le dépôt d'un matériau électroconducteur dans une résine électriquement isolante (204) ; plus préférentiellement dans lequel le récipient est formé par des stratifications de résine et de matériau de renforcement et incorpore les électrodes maillées (200) à l'intérieur des stratifications.
